# EUROPEAN PATENT SPECIFICATION

(11) **EP 1 430 234 B1**
(45) Date of publication and mention of the grant of the patent: **08.06.2005**
(21) Application number: 01976632.8
(22) Date of filing: 28.09.2001
(51) Int. Cl.: F16D 65/12

(54) **SLIDING DISC BRAKING SYSTEM**
BREMSSYSTEM MIT VERSCHIEBLICHER BREMSSCHEIBE
SYSTEME DE FREINAGE A DISQUE COULISSANT

(43) Date of publication of application: 23.06.2004
(73) Proprietor: Freni Brembo S.p.A., 24035 Curno (Bergamo) (IT)
(72) Inventor: PERICO, Paolo, I-24125 Bergamo (IT)
(74) Representative: Crippa, Paolo Ernesto
(86) International application number: PCT/IT2001/000502
(87) International publication number: WO 2003/029684

(56) References cited:
- EP-A- 0 726 406
- US-A- 5 437 351

## Description

The present invention relates to a sliding disc braking system, as for example described in EP-A-0726406.

It is known to produce disc brakes which provide for the use of a fixed type caliper, comprising at least one actuating device acting on a first pad and arranged on only one side of the disc, customarily the side of the disc facing towards the inside of the vehicle. Known discs adapted to co-operate with said fixed calipers must necessarily be movable in an axial direction so as to abut on the opposite side against a fixed reference comprising a second pad, or another friction member, and react to the action exerted by the at least one actuating device of the caliper. In particular, it is known to produce these discs so as to make them slidable on a rotating member fixed to the hub of the wheel of the vehicle.

In other words, this sliding disc must be able to slide on the hub, or on a bell fixed to the hub, in order to be able to exert the necessary braking action.

In the prior art there are various examples of disc brakes of this type, generally comprising multiple discs, and customarily used in the field of aeronautics.

These known braking systems comprise discs equipped with braking bands slidable on a bell. For example, these braking systems are described in US Patents 6.131.932, 4.614.254 and 4.540.067.

A known drawback of these sliding disc braking systems lies in the fact that the necessary high braking actions directed along the axis of the disc cause deterioration of the braking band and bell portions in contact with each other and producing the necessary slidable coupling. This deterioration of the sliding coupling between band and bell, if it is intensified, leads to malfunctions which are unacceptable for the braking system, such as local over-stressing with the occurrence of cracks and also jamming of the band on the bell.

These known drawbacks are even more marked where provision is made for the use of braking bands produced in carbon or in ceramic materials, such as, for example, materials comprising C/SiC. It is in fact known that these materials are not suitable either for sliding directly on other materials, in particular if metallic, or, even less, for the necessary robust connections, such as screws, bolts or rivets, to members which are instead adapted to sliding. These further drawbacks are dictated in the first place by the known characteristics of these materials, and in particular by their hardness and relative fragility.

As a consequence, there was a strong need to provide a braking system which allows easy and secure sliding of the disc on the bell, even where provision is made to use braking bands produced from hard and fragile materials.

The problem underlying the present invention is therefore that of devising a sliding disc braking system which has structural and functional characteristics such as to satisfy the aforesaid requirements and at the same time remedy the drawbacks exhibited by the braking systems of the prior art.

Said problem is solved as described in the main claim appended hereinafter.

Further characteristics and advantages of the sliding disc braking system according to the present invention will become clear from the following description of some of its preferred exemplary embodiments, provided by way of non-limiting example with reference to the appended drawings, in which:
Figure 1 illustrates an exploded axonometric view, from the side external to the vehicle, of a braking system;
Figure 2 shows an axonometric view, from the side external to the vehicle, of the braking system in Figure 1;
Figure 3 illustrates an axonometric view, from the side internal to the vehicle, of the braking system in Figure 1;

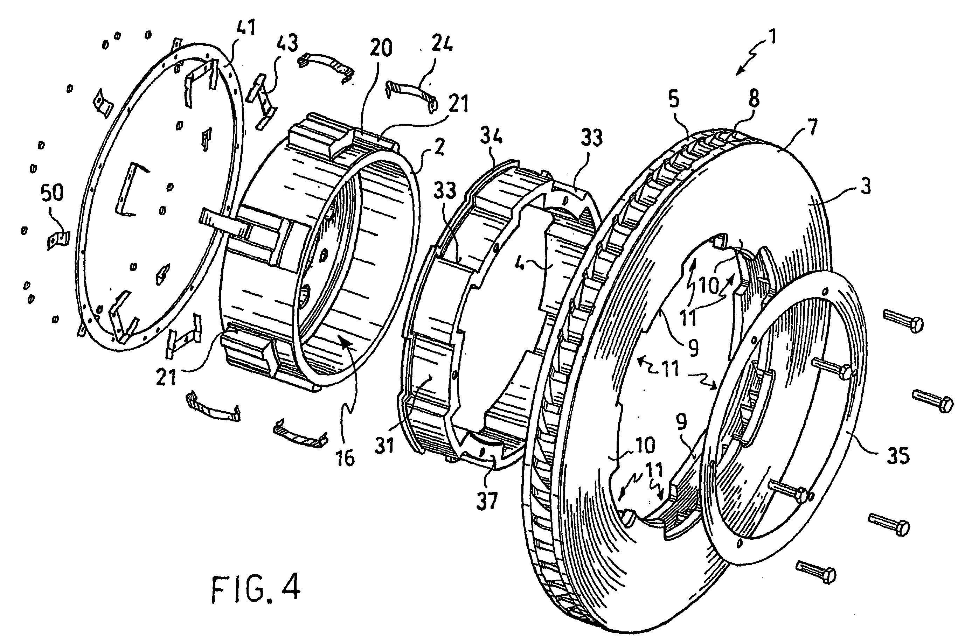

Figure 4 shows an exploded axonometric view, from the inner side of the vehicle, of the braking system in Figure 1;
Figure 5 illustrates a cross-section, along the line V-V in Figure 2, of the braking system in Figure 1;
Figure 6 shows a cross-section, along the line VI-VI in Figure 2, of the braking system in Figure 1;
Figure 7 illustrates an exploded axonometric view, from the side external to a vehicle, of a second embodiment of a braking system according to the invention;
Figure 8 shows an axonometric view, from the side external to a vehicle, of the braking system in Figure 7;

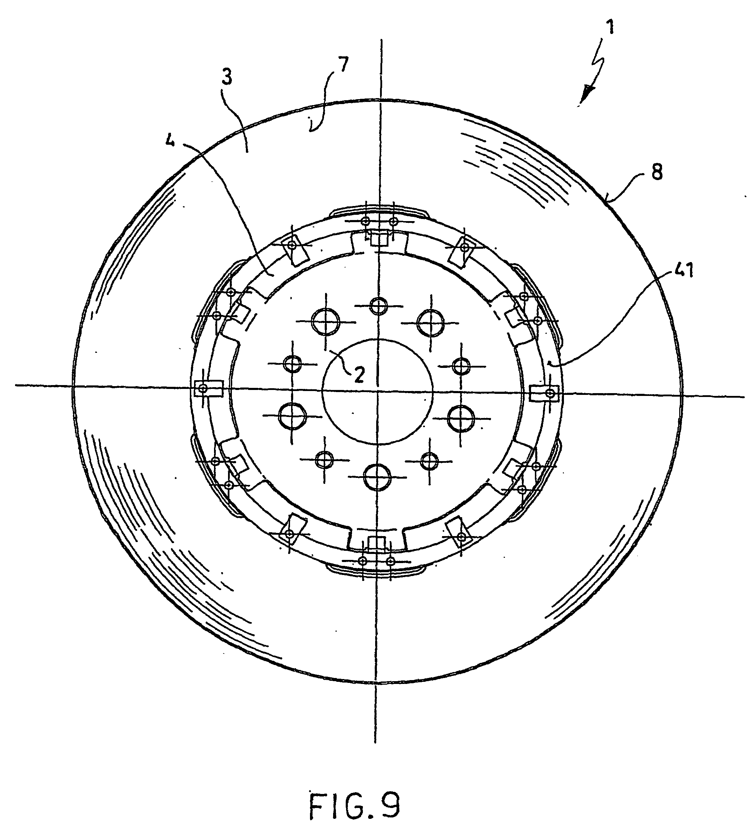

Figure 9 illustrates in elevation, from the side external to the vehicle, the braking system in Figure 7;

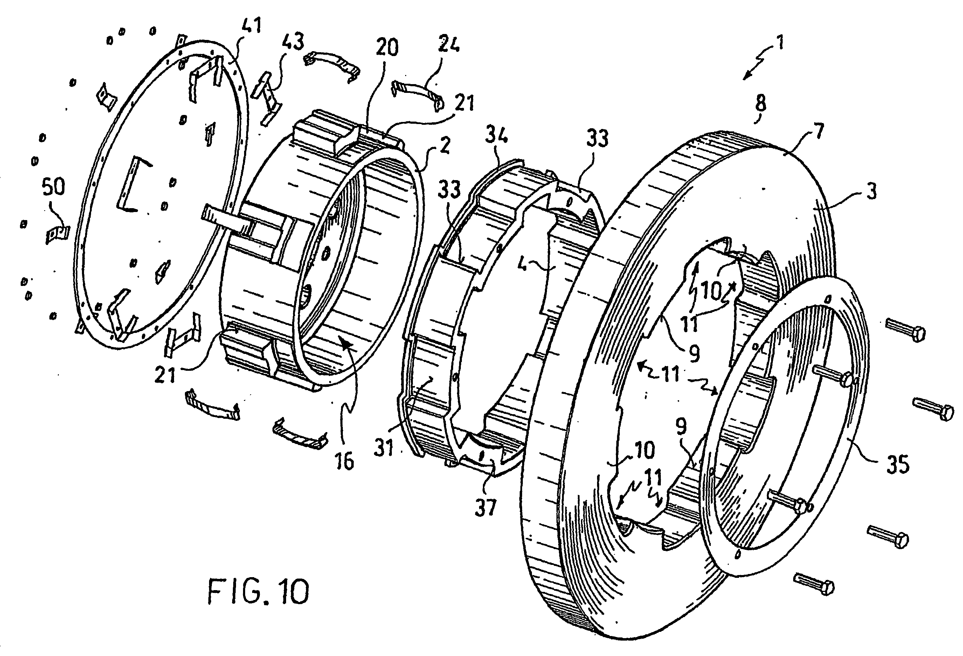

Figure 10 illustrates an exploded axonometric view, from the inner side of the vehicle, of the braking system in Figure 7;
Figure 11 illustrates a view in elevation of a detail of a braking system according to a further embodiment, and
Figure 12 shows a section, along the line indicated by the arrows XII-XII in Figure 11, of the braking system in Figure 11.

As can be seen from the drawings, the braking system, indicated as a whole by 1, comprises a bell 2, a brake band, or braking band 3, and an intermediate ring 4 adapted for coupling the braking band to the bell.

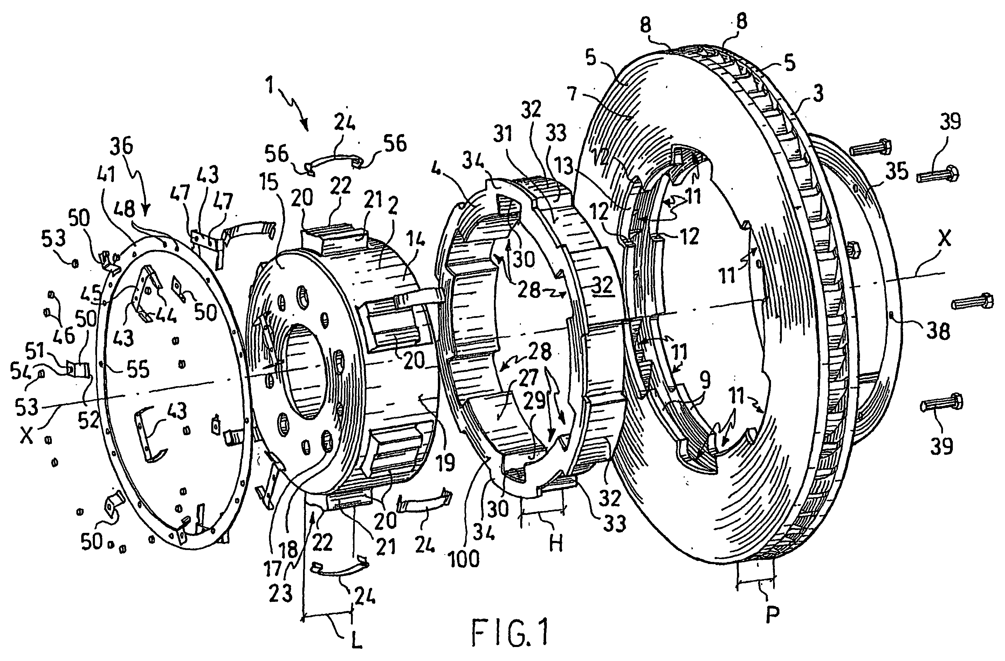

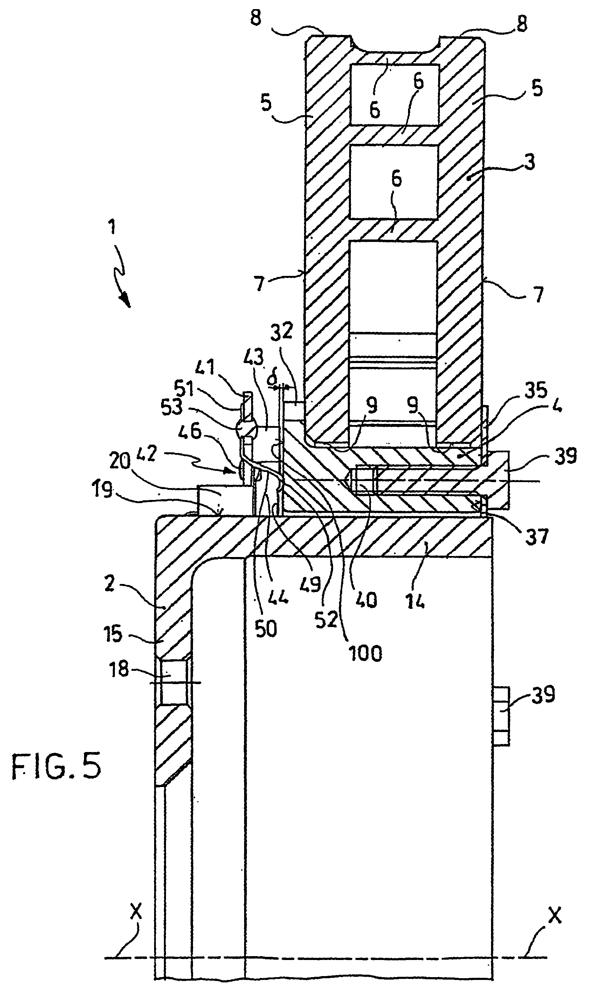

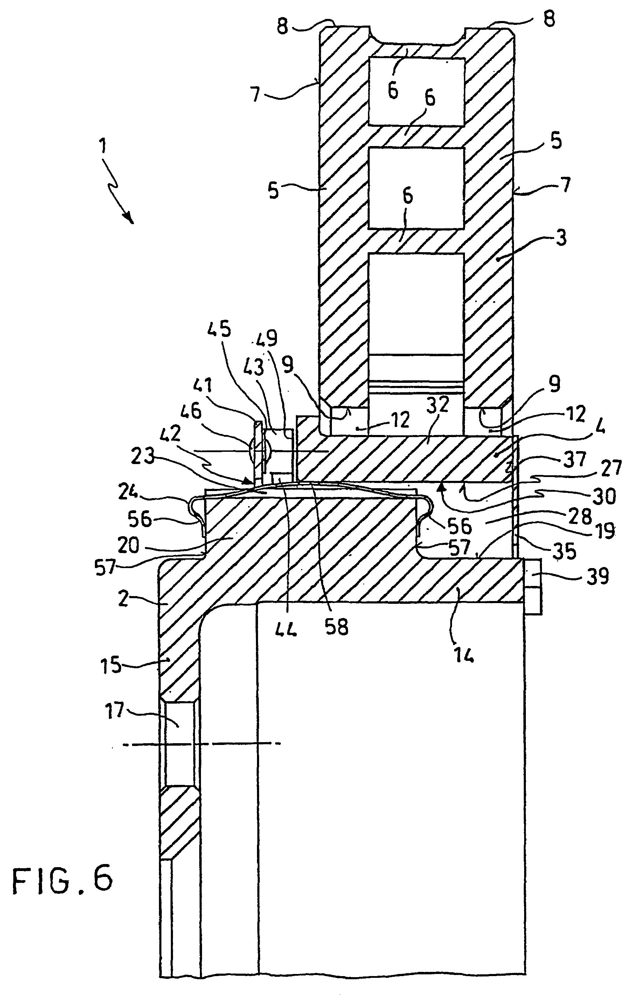

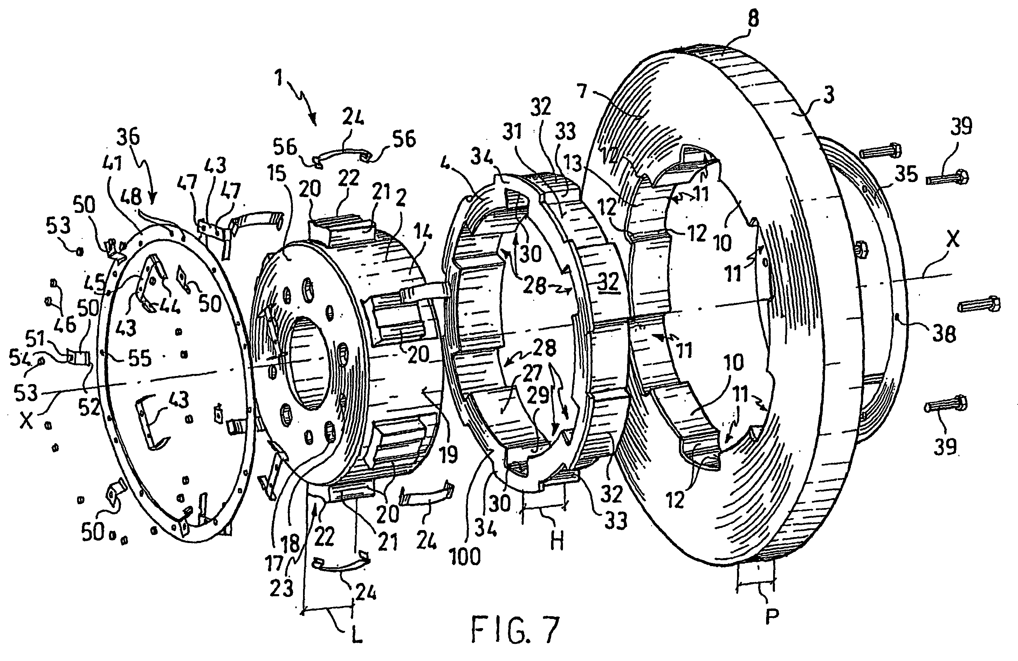

The braking band 3 has an annular axially symmetrical body. Said braking band may be both of the non-ventilated type (Figure 7) and of the ventilated type (Figure 1), in which case it comprises opposed plates 5 connected to each other by means of fins 6 (Figures 5 and 6) or bridges and defining ventilation conduits. Said body of the braking band can be produced from various materials adapted to the braking action, including cast iron and also carbon and carbon fibres, as well as ceramic material, such as, for example, C/SiC.

Said braking band is bounded axially by opposed planar braking surfaces 7 and radially by at least one radially outer surface 8, as well as at least one radially inner surface 9, 13.

In the example shown in Figure 1, the braking band 3 being of the ventilated type, said at least one radially inner and outer surface comprise two radially inner edges 9, 13, or their part facing towards the axis (X-X), bounding the body of the plates 5, as well as two radially outer edges 8, bounding said plates in the opposite direction from the axis.

From said at least one radially inner surface 13 a plurality of projections 10 project towards the axis, bounding a corresponding first plurality of recesses 11. Said plurality of recesses is a series of recesses equally spaced over the inner perimeter of the braking band. In the example illustrated in the drawings a plurality of six recesses equally spaced from one another is provided or, in the case of a ventilated disc, two pluralities of five recesses aligned with one another or facing one another, arranged at the inner radial end of the two plates.

Each of said recesses has in a plane transverse to the axis (X-X) of symmetry of the disc, or of rotation of the disc, a C-shaped cross section having flanks 12 comprising walls arranged in radial planes. Said walls or flanks of the recess constitute support or abutment elements adapted for a geometric coupling necessary for transferring a braking action. Said flanks are connected to the base 13 of the recess, which extends along an arc having a circumference concentric with the axis of symmetry or rotation of the disc.

Moving on now to describe the bell 2, this has an axially symmetrical body, for example drum-like, comprising an annular member 14 connected to a base 15, for example annular, arranged in a plane transverse to the axis (X-X) of symmetry and rotation of the bell, so as to define internally a cylindrical seat 16 adapted to receive, for example, a spindle of a hub of a vehicle suspension. Said annular base comprises at least one series, and preferably two series, of holes 17, 18 adapted to receive members for connecting the bell to the spindle. From the radially outer shell 19 of the annular element of the bell a first plurality of projections 20 extend radially away from the axis of symmetry and rotation. According to one embodiment, said first plurality of projections comprises projections distributed circumferentially and equally spaced from one another. Each of said projections 20 is of substantially prismatic shape. For example, each of said projections extends in a direction substantially parallel to the axis (X-X) of symmetry and rotation of the bell, forming flanks 21 arranged in radial planes and adapted to a geometric sliding coupling. Said flanks further constitute bearing or abutment elements.

According to one embodiment, the radially outer portion 22 of each of said projections has a longitudinal recess, or groove 23, adapted to received means capable of exerting a radial thrust action 24. According to a further embodiment, the groove 23 provided on the top of each projection 20 of said first plurality of projections has a length equal to the entire axial length of said projection.

Advantageously, it is possible to provide a pair of notches 25, provided opposite each other, arranged in the flanks of each projection of the bell. These notches are adapted to receive elements capable of exerting a tangential thrust 26.

It should be noted that said first plurality of projections 20 has an axial length useful for coupling the intermediate ring and of a length useful for a free axial travel of said intermediate ring, a travel necessary for the correct operation of the sliding disc braking system, as will be described in more detail hereinafter.

Advantageously, interposed between said bell 2 and said braking band 3 the intermediate ring 4 described above is provided. The intermediate ring 4 has an annular body axially symmetrical with respect to an axis (X-X) of symmetry and rotation thereof. For example, said axis of symmetry and rotation coincides with the axis of symmetry and rotation of the braking band and of the bell. Said intermediate ring comprises on a radially inner surface 27 a second plurality of recesses 28. These recesses are adapted to receive the plurality of projections 20 of the bell 2 and at the same time are adapted to permit precise sliding of the intermediate ring 4 along said plurality of projections 20 of the bell. Said second plurality of recesses 28 is, for example, distributed circumferentially in the radially inner portion of the intermediate ring such that said recesses are equally spaced from one another. According to one embodiment, said second plurality of recesses is equal in number to the first plurality of projections of the bell so as to receive all the first projections of the bell. Each recess of said second plurality of recesses is bounded by lateral walls or flanks 29 arranged in radial planes. Each of said flanks constitutes an abutment member and at the same time a sliding element adapted to interact forcibly with the flanks 21 of each projection 20 of said first plurality of projections of the bell. In other words, each of said flanks acts as a sliding block constraining element adapted to bear against the facing corresponding flank of the projection of the bell. The opposed flanks 29 of the second plurality of recesses when they interact with the flanks 21 of the first plurality of projections of the bell, by constraining the intermediate ring 4 in a direction tangential to the bell 2 at the same time permitting precise sliding, or free movement of the intermediate ring in an axial direction to the bell. Owing also to the axial length of each projection 20 of said first plurality of projections of the bell, this axial sliding movement of the intermediate ring on the bell is precise, reducing the probability of jamming or sticking, a probability which is completely eliminated by the provision of the means for pre-loading the coupling 26, described in more detail hereinafter. In other words, each projection 20 of said first plurality of projections of the bell constitutes a centring, entraining and guiding element for the intermediate ring 4.

Said opposed flanks 29 of each recess of said second plurality of recesses of the intermediate ring is connected to a base surface 30 which radially internally bounds the body of the intermediate ring in an arc of a circle concentric with said axis (X-X) of rotation and symmetry of the intermediate ring. The depth of each of said recesses 28 of the second plurality of recesses of the intermediate ring is such as to avoid direct contact of said recess base wall with the radially outer portion of each projection of the bell.

Each recess 28 of said second plurality of recesses has an axial length, for example, equal to the entire axial height H, or depth, or axial length, of said intermediate ring.

To further advantage, on a radially outer surface 31 of said intermediate ring a second plurality of projections 32 is provided. This second plurality of projections is adapted to coupling geometrically with the first plurality of recesses 11 of the braking band 3 in order to produce a geometric coupling which constrains the braking band in a tangential direction to said intermediate ring. According to one embodiment, said second plurality of projections 32 of the intermediate ring is distributed circumferentially over the radial outer surface of the intermediate ring such that said projections are equally spaced from one another, and such that each of them is received in the respective recess provided in the braking band. In particular, said projections extend axially to the intermediate ring for its entire height H, or axial length, each forming flanks 33 arranged in radial planes and adapted to co-operate with the flanks 12 bounding the recesses 11 of the braking band, so as to guarantee a stable tangential constraint of the braking band to the intermediate ring.

In proximity to the edge provided between the radial outer surface and the lateral surface of the intermediate ring facing, for example, towards the outside of the vehicle, a shoulder 34 is provided. According to one embodiment, said shoulder extends over the entire perimeter formed by said edge, constituting an abutment member for the braking band.

The sliding disc braking system is completed by a constraining ring 35, adapted to axially block the braking band when coupled to the intermediate ring, and also a play take-up device, indicated as a whole by 36. This play take-up device comprises a first device adapted to bias the intermediate ring constantly in a radial direction 24, or a tangential direction 26, for a secure and precise, or braked, or pre-loaded, movement of the intermediate ring on the bell. By the term "braked" there is also meant a movement which is controlled, or free of play, all these terms referring to the movement of the sliding geometric coupling between the intermediate ring and the bell. Finally, the play take-up device comprises a second device adapted to resiliently bias the intermediate ring in an axial direction in the opposite direction to the action of actuating means provided in a caliper body and adapted to act on only one of the braking surfaces of the braking band. Preferably, said device which resiliently biases the intermediate ring in an axial direction acts in such a manner as to urge the intermediate ring towards the inner side of the vehicle, opposing the contrary action produced by the caliper during the braking action of the vehicle. This device which acts resiliently on the intermediate ring is produced in such a manner as to act for a well defined stroke, or in other words, biasing the ring along an axial travel of predetermined magnitude, so as to cancel out this resilient biasing action when the intermediate ring is at a pre-set distance from the opposing means of the braking band or from a second pad, when the braking action of the caliper acting in the opposite direction finishes. There is further provided a third abutment device, adapted to support said second device which resiliently biases the intermediate ring in an axial direction. This abutment device is further adapted to maintain a minimum distance between said second device and the intermediate ring during the advance of the intermediate ring along the bell due to the wearing of friction material provided on said second pad.

Proceeding with the description of the above-mentioned constraining ring, this comprises an annular element 35 adapted to be fixed to the lateral surface 37 of the intermediate ring which is opposed to the surface equipped with a shoulder. This constraining ring is adapted to firmly clamp the braking band, fitted onto the intermediate ring, between itself and said shoulder. According to one embodiment, this constraining ring comprises a body of limited axial length and predominantly radial direction. Said radial length thereof is such as to provide, in a radially more inward portion thereof, a series of through holes 38, preferably distributed circumferentially and equally spaced, adapted to receive fixing means, such as, for example, screws 39 which engage in corresponding blind threaded holes 40 provided in the body of the intermediate ring and opening on the side thereof opposed to that provided with a shoulder (Figure 5). This constraining ring, once firmly fixed to the intermediate ring, forces the braking band to abut against the shoulder so as to firmly constrain the braking band to the intermediate ring, or, in other words, it clamps the braking band, preventing it from making any axial movement relative to the intermediate ring or, in still other words, rendering the braking band firmly connected to the intermediate ring, almost as if it were integral with the latter.

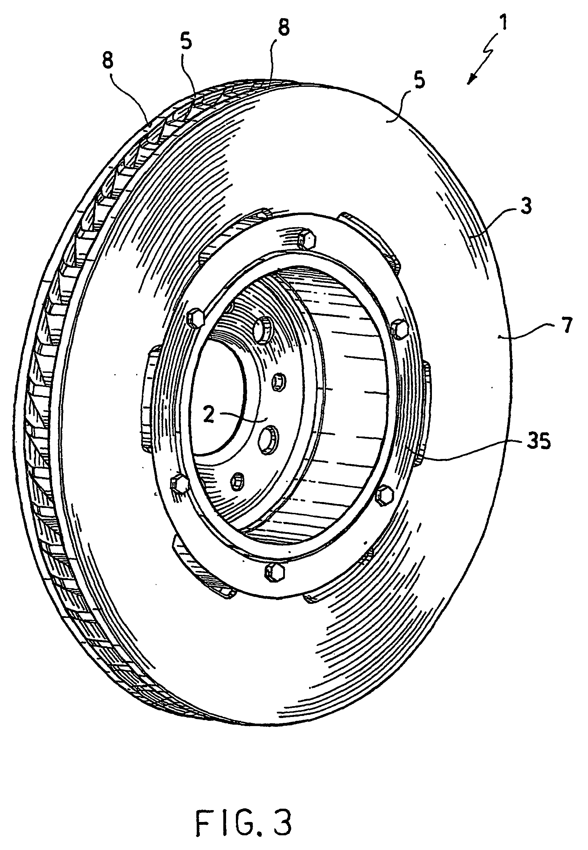

Said constraining ring, besides ensuring a firm connection between the braking band and the intermediate ring, also performs the function of protecting this coupling from dirt, always present at the suspension of a vehicle. In particular, the constraining ring has an inside diameter substantially equal to, or in other words slightly greater than, the outside diameter of the bell, or rather of the radially outer cylindrical shell of the latter, such that once the constraining ring is assembled to the intermediate ring, which is in turn fitted onto the bell, this constraining ring constitutes a dirt shield for the different couplings: bell/intermediate ring and intermediate ring/braking band (Figures 3, 5, 6 and 12).

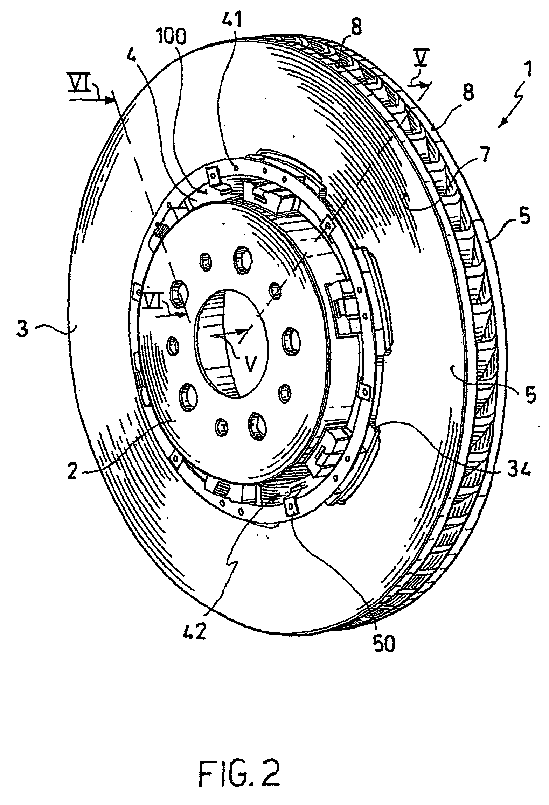

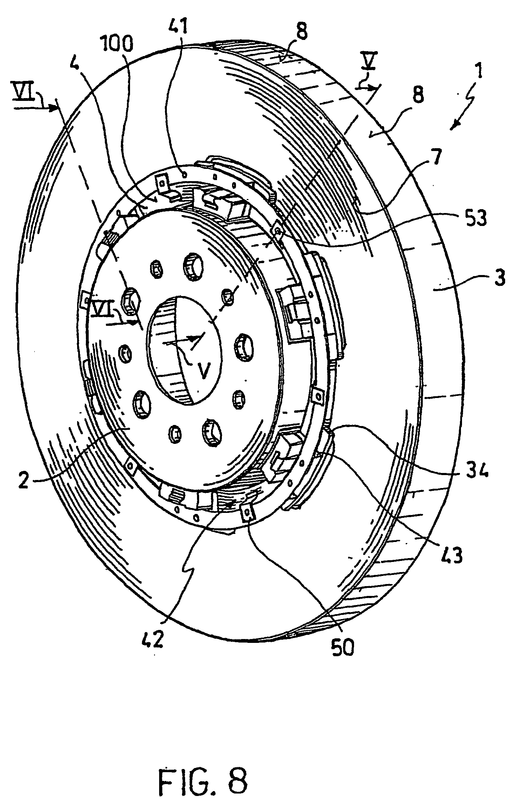

On the opposite side with respect to the constraining ring, that is, on the side facing towards the outside of the vehicle, a further ring 41 is provided, this also being of limited axial dimensions and predominantly radial extent, constituting one of the components of said play take-up device. According to one embodiment, this ring has an inside diameter such as to allow a gap 42 to be created between this ring and the top of the first plurality of projections of the bell when the ring is fitted onto the latter (Figures 2, 5, 6 and 8). This ring constitutes a support member for a plurality of pieces of sheet metal bent into a fork shape, or fork plates 43, which extend their prongs 44 radially from said support ring 41 towards its axis (X-X) of symmetry and rotation, which may coincide with the axis of symmetry and rotation of the bell. Said plurality of fork plates 43 is preferably distributed circumferentially over said ring and equally spaced and, preferably, equal in number to that of the projections of said first plurality of projections of the bell. Each of said fork plates has a connecting portion 45 between the prongs 44 suitable for firm connection to the support ring. Said connection is, for example, produced by means of rivets 46 received in suitable holes 47, provided in said connecting portion, and also in corresponding holes 48 provided in the support ring. From said portion 45, arranged, for example, parallel to the support ring, each plate bends in an axial direction in order then to extend on both ends the two prongs 44, in a radial direction with an abutment edge 49 thereof facing the intermediate ring. The distance between said prongs of each fork plate is such as to allow each of said fork plates to be fitted straddling a projection 20 of the bell. Said fork plate is further adapted to exert a predetermined clamping action on the flanks 21 of the projection of the bell in such a manner as to guarantee a connection between said support ring and the bell having a predefined force, or, in other words, an axial constraint between said support ring and the bell which is capable of yielding when a predetermined threshold of force directed in an axial direction to the bell is exceeded.

As an alternative to said fork plates it is possible to provide a support ring comprising extensions which project radially towards the axis of the bell and adapted to produce between opposed or facing flanks 21 of contiguous projections 20 of the bell equal and contrary actions on the flanks of these projections so as to generate the aforesaid axial constraint capable of yielding when the pre-set axial stress is reached. Said extensions are further bent towards the intermediate ring, producing an abutment edge for said intermediate ring.

Said support ring 41 constrained axially to the bell in a predetermined yielding manner constitutes a support for a plurality of springs 50 acting in an axial direction. This plurality of springs is preferably distributed circumferentially on said support ring and equally spaced. Each of said springs is, for example, a thin plate bent into an S-shape so as to have a first end 51 for fixing or connection to the support ring and a second thrust end 52 adapted to interact with the facing lateral surface 100 of the intermediate ring 4. According to one embodiment, the first connection end 51 is fixed to the support ring 41 by means of rivets 53 received in through holes 54 provided in said ends and corresponding holes 55 provided in the support ring. Preferably, said S-shaped spring 50 is secured to the support ring on the opposite face of the latter with respect to the intermediate ring. Said spring, projecting towards the inside of the ring, enters the gap 42 left between the support ring and the bell, approaching, with its portion bent into an S-shape, the intermediate ring, in order to abut with its bearing end 52 against the lateral surface 100 of the intermediate ring when the support ring is fitted onto the bell and in an operating state.

When not stressed but in an operating state, the assembly of the fork plates and the S-shaped springs projects towards the intermediate ring by a different and predetermined distance from each other. In particular, the S-shaped spring protrudes over the fork plate by a pre-set distance, equal to a distance defined as a desired clearance between the braking band and the second of the pads (the pad arranged on the opposite side of the braking band with respect to the actuating device of the caliper) adapted to exert the necessary braking action on the braking band when the latter is not subjected to the braking action. Said S-shaped springs constitute the aforesaid second device which resiliently biases the intermediate ring in an axial direction while said fork plates constitute the aforesaid third abutment device of the intermediate ring.

Concerning the first device which constantly biases the intermediate ring in a radial or tangential direction, this has in a first embodiment thereof a plurality of leaf springs 24 which each grip round a projection 20 of said first plurality of projections of the bell, inserting themselves partially into the grooves 23 thereof provided on the top of the projections. Each of these leaf springs has a configuration with ends bent into a fork shape 56 to exert a forcible coupling with the opposed lateral surfaces 57 of each projection (Figure 6). Each leaf spring is arched in such a manner that the convex part 58 thereof can abut against the base surface 30 of the recesses provided inside the intermediate ring and each receiving a projection of the bell.

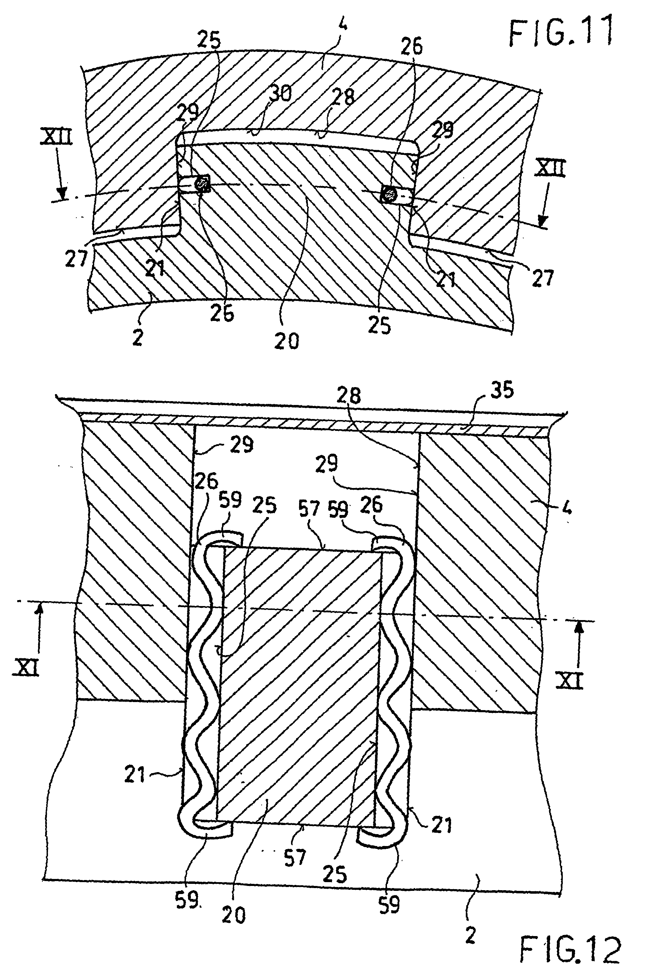

As an alternative, it is possible to provide springs which constantly bias the intermediate ring in a tangential direction. As illustrated in Figures 11 and 12, in the opposed notches 25 provided on the flanks 21 of the projections 20 of the bell 2 there is partially received a spring 26 having a predominantly longitudinal corrugated section and ends 59 bent so as to engage forcibly against the opposed lateral surfaces 57 of each projection. The amplitude of the corrugations of each spring is such as to be greater than the depth of each notch so as to provide a resilient action between the bottom of each notch and the flanks of the recesses of the intermediate ring and such as to exert the desired controlled sliding action of the intermediate ring on the bell or, in other words, the desired tangential pre-loading between the intermediate ring and the bell for a controlled axial movement of the ring. This latter embodiment has a further extremely relevant advantage. By pre-loading the contiguous flanks of the bell and the intermediate ring, any free play between them is avoided, facilitating a gradual loading of the flanks during the first moments of the braking action and, in particular, any possibility of jamming of the intermediate ring on the bell during the relative sliding between the two is avoided.

The assembly of the sliding disc braking system according to the present invention takes place as follows.

First of all the braking band is fitted onto the intermediate ring, taking care that there is received in each recess of the braking band the corresponding projection provided in the intermediate ring. The operation is completed by butting the braking band against the shoulder of the intermediate ring.

The constraining ring is then secured by means of the appropriate screws to the intermediate ring so as to constrain the braking band having axial dimensions slightly larger than the remaining axial length of the intermediate ring (the portion of the intermediate ring free from the shoulder). In this way, the axial coupling between the braking band and the intermediate ring will be devoid of play.

The devices which constantly bias the intermediate ring in a radial or tangential direction are then positioned in the recesses provided in the top of the projections or in the respective notches provided on the flanks of the latter. These leaf springs or corrugated springs remain firmly in position gripped at the end of the bell owing to their clip-like configuration with the ends bent so as to forcibly grip the lateral surfaces of each projection.

Following this, the braking band/intermediate ring assembly is slipped onto the bell fixed to a stub axle or spindle, taking care that the projections of the bell are received in each recess of the intermediate ring and taking care to load the leaf springs, or the corrugated springs, between the grooves, or the notch, and the walls bounding the recess of the intermediate ring. The intermediate ring is fitted onto the bell in order to position it so as to be, with the braking band, in a position which in operation would be facing new pads arranged in the caliper body, with its braking surfaces equally spaced therefrom.

The assembly constituted by the intermediate ring firmly connected to the braking band, fitted onto the bell, remains in the predetermined position of new pads owing to the pre-loading exerted by the leaf springs or by the corrugated springs between the bell and the intermediate ring.

Finally, the support ring provided with the S-shaped springs and the plates bent into a fork shape is fitted onto the bell until the positions of each of the plates bent into a fork shape are such as to engage with their prongs the flanks of each projection. The intermediate ring is then advanced until the active end of each S-shaped spring comes into contact with the lateral surface, or head surface, of the intermediate ring. The support ring is maintained in position, in the aforesaid position with the S-shaped springs bearing on the surface of the intermediate ring, owing to the friction exerted by the prongs of the fork plates on the flanks of the projections of the bell.

A description will now be given of the operation of a sliding disc braking system of this type. When the at least one actuating device, provided in the caliper, is actuated and comes into contact with the first pad facing it, pushing it towards the braking surface of the braking band, a thrust is exerted which moves the braking band and the intermediate disc firmly connected thereto. This assembly slides on the bell towards the second pad facing the opposed braking surface of the braking band. The first pad and the braking band on the intermediate ring travel towards the second pad until all the play is taken up and initiates the braking action, during which there is further sliding of the braking band and the intermediate ring on the bell of a magnitude corresponding to the wear of the friction materials of the pads.

At the end of the braking action, each of the components of the sliding disc braking system returns to its rest state except for the wear of the friction material of said second pad, in a manner which will be described in more detail hereinafter.

During the actuation of the sliding disc braking system comprising a braking band firmly connected to an intermediate ring slidable on a bell, in the phase of initial approach to the second pad opposite the actuating systems of the caliper, the lateral head surface, or the surface facing towards the outside of the vehicle, of the intermediate ring, urges, by loading them, the S-shaped springs by acting on their active end until all the play existing between the pads and the braking surfaces of the braking band are taken up and the braking action takes place. For correct operation, the clamping action exerted by the fork plates on the flanks of the projections of the bell is such as to maintain the support ring stationary with respect to the bell during the loading of the S-shaped springs. At the end of the braking action the devices of the caliper return to their rest position owing to the constructional stratagems, which are known per se, while the braking band is brought back into its rest state solely by the resilient action of the S-shaped springs.

When the displacement of the braking band, due to the play and or the wear of the second pad opposite the actuating devices, is greater than the maximum projection of the active end of the S-shaped springs with respect to the prongs of the fork plates, or in other words, all the protruding predefined distance of the S-shaped springs has been taken up, then the prongs of the fork plates enter, with the abutment edges, into contact with the head surface of the intermediate ring and the entire support ring moves by travelling on the projections of the bell, thus effecting the take-up of the wear of the second pad. In other words, the braking band repositions itself again into a working state in which it faces the actuating devices, when not active, at the same distance with its braking surface from the second pad regardless of whether the latter is worn during the braking action.

It should further be noted that the corrugated springs, in addition to maintaining the braking band in its operative position, that is to say, pre-loading the sliding connection between the intermediate ring and the bell, have the function of checking any jamming due to play of the braking band itself in its plane.

From what has been described so far, it is easy to understand how the sliding disc braking system of the present invention makes it possible to remedy all the drawbacks of the prior art.

It is particularly advantageous that no direct relative sliding between the braking band and the bell is provided, at the same time preventing connecting means having a localised action from producing localised over-stressing in the braking band, even provided in hard and fragile materials.

It is further possible to avoid jamming or sticking in the sliding movement of the braking band on the bell. In particular, it is advantageous to provide an intermediate ring of material adapted to sliding on the bell and different from that of the braking band adapted instead to provide the braking action. For example, the intermediate ring is made of aluminium alloy or anodised aluminium alloy, while the braking band is made of cast iron, of carbon, of carbon and carbon fibre, or of ceramic material, such as, for example, ceramic material comprising C/SiC. Preferably, the intermediate ring is made of steel and in particular alloy steel, so as to guarantee optimum characteristics of resistance to wear and mechanical strength in general, and also to guarantee the ease and precision of sliding between the ring itself and the bell. The bell is also made of aluminium alloy or anodised aluminium alloy and, preferably, of steel or alloy steel in order also to guarantee reduced wear thereof.

It is clear that variants and/or additions to what has been described and illustrated above may be provided.

An expert in the field, for the purpose of satisfying contingent and specific requirements, may apply to the preferred solution of embodiment of the sliding disc braking system described above numerous modifications, adaptations and substitutions of elements with other functionally equivalent elements, without however departing from the scope of the following claims.

## Claims

1. A braking system (1) comprising a sliding disc for a disc brake having an axis of rotation (X-X), comprising opposed braking surfaces (7) adapted to cooperate with a fixed caliper comprising actuating means arranged in front of only one of the braking surfaces (7) of the disc for applying a braking action to the disc, said disc further comprising:
- a bell (2) adapted to be fixed to a spindle of a vehicle and comprising externally a first plurality of projections (20) extending parallel to said axis of rotation (X-X) and having outer portions;
- a braking band (3) comprising on at least a radially inner surface (9,13) thereof a first plurality of recesses (11);
wherein
interposed between said bell (2) and said braking band (3) there is provided an intermediate ring (4), said ring comprising on a radially outer surface (8,31) thereof a second plurality of projections (32) adapted to coupling geometrically with said first plurality of recesses (11) of the braking band (3) in order to provide a geometric coupling which constrains said braking band (3) to said intermediate ring (4) in a tangential direction;
said braking system (1) being **characterised in that** said intermediate ring (4) comprises:
- on a radially inner surface (27) thereof a second plurality of recesses (28) having a recess base (13) wall;
- each of said recesses (28) having a depth suitable to avoid direct contact of said recess base (13) wall with the radially outer portion (22) of each projection of the bell (2);
- said second plurality of recesses (28) being adapted to receive said plurality of projections of the bell (2) and adapted to permit free sliding of the intermediate ring (4) along said plurality of projections of the bell (2).

2. A braking system (1) according to claim 1, wherein each recess of said second plurality of recesses (28) of the intermediate ring (4) is bounded by flanks (29) arranged radially to form elements for the bearing and sliding of the intermediate ring (4) on the projections of the bell (2).

3. A braking system (1) according to claim 1 or 2, wherein the intermediate ring (4) is provided with a shoulder (34) arranged in proximity to an edge bounding the outer radial surface of said intermediate ring (4), said shoulder (34) being adapted to abut axially the braking band (3) fitted onto the intermediate ring (4).

4. A braking system (1) according to any one of claims 1 to 3, wherein a constraining ring (35) is provided which can be removably associated with a lateral surface (37) of the intermediate ring (4), said constraining ring (35) being adapted to axially constrain the braking band (3).

5. A braking system (1) according to claim 4, wherein said constraining ring (35) is arranged axially opposite said shoulder (34) of the intermediate ring (4) so as to clamp the braking band (3) between itself and the shoulder (34).

6. A braking system (1) according to claim 4 or 5, wherein the removable constraining ring (35) is connected to the intermediate ring (4) by means of screws (39).

7. A braking system (1) according to any one of claims 4 to 6, wherein the constraining ring (35), when associated with the intermediate ring (4), extends radially from close to the outer surface (8) of the bell (2) to the braking band (3) for protection of the geometric coupling between the braking band (3) and the intermediate ring (4), and also for protection of the geometric sliding coupling between the intermediate ring (4) and the bell (2).

8. A braking system (1) according to any one of the preceding claims, wherein said intermediate ring (4) is made of material adapted to the transmission of mechanical action and at the same time to sliding.

9. A braking system (1) according to claim 8, wherein the intermediate ring (4) is made of steel.

10. A braking system (1) according to any one of the preceding claims, wherein the braking band (3) is of the self-ventilating type.

11. A braking system (1) according to any one of the preceding claims, wherein the braking band (3) is made of cast iron.

12. A braking system (1) according to any one of the preceding claims, wherein the braking band (3) is made of material comprising carbon.

13. A braking system (1) according to any one of the preceding claims, wherein the braking band (3) is made of material comprising silicon carbides.

14. A braking system (1) according to any one of the preceding claims, wherein between said bell (2) and said intermediate ring (4) there is provided a device for pre-loading the geometric coupling in a radial direction.

15. A braking system (1) according to claim 14, wherein said device comprises means which constantly urge the intermediate ring (4) in a radial direction.

16. A braking system (1) according to claim 15, wherein in the top of at least one of the projections of the bell (2) a groove (23) is provided, adapted for partially receiving a leaf spring (24) which constantly urges the intermediate ring (4) away from the bell (2).

17. A braking system (1) according to claim 16, wherein said leaf spring (24) hooks on like a clip to the lateral surfaces of the projection (20) of the bell (2).

18. A braking system (1) according to any one of claims 1 to 13, wherein between said bell (2) and said intermediate ring (4) there is provided a device for pre-loading the geometric coupling in a tangential direction.

19. A braking system (1) according to claim 18, wherein at least one of the projections of the bell (2) has at least one notch (25) on a radial flank (21) thereof, adapted for receiving a spring (26) which biases the corresponding flank (29) of the recess of the intermediate ring (4) away from said flank (21) of the projection of the bell (2).

20. A braking system (1) according to claim 19, wherein said spring (26) is a spring with a sinuous body which extends along said notch (25) bearing with vertices of the curved portions on the base of the notch (25) and pressing at least a part of the opposed vertices against the corresponding flank (29) of the recess of the intermediate ring (4).

21. A braking system (1) according to any one of the preceding claims, wherein, associated with the bell (2), there is provided a device (36) for taking up the play acting on said intermediate ring (4).

22. A braking system (1) according to claim 21, wherein said play take-up device (36) comprises means which bias the intermediate ring (4) in an axial direction supported at abutment means for the intermediate ring (4), said abutment means being connected to the bell (2) by means of a constraint that can yield when a predetermined threshold of axial stress is exceeded.

23. A braking system (1) according to claim 21 or 22, wherein said play take-up device (36) comprises a support ring (41) that can be fitted onto the bell (2) and further comprising at least one plate bent into a resilient fork shape (43) directed radially towards the axis of the bell (2) and adapted to grip with a predetermined level of pressure the flanks (21) of the projections of the bell (2).

24. A braking system (1) according to claim 23, wherein said fork plate (43) has an edge facing towards the intermediate ring (4) forming a stop abutment.

25. A braking system (1) according to claim 24, wherein said play take-up device (36) further comprises at least one S-shaped spring (50) linked by one of its ends (51) to the support ring (41) and projecting with an active end (52) thereof from said support ring (41) towards the intermediate ring (4) of a length, protruding with respect to the abutment edge (49) of the fork plate (43), having a predetermined value.

26. A connecting element for sliding disc braking bands (3) of disc brakes, comprising:
an intermediate ring (4) comprising:
- on a radially inner surface (27) thereof, connecting means of anti-rotational form that can slide freely axially, said means being adapted to the connection of said intermediate ring (4) to a bell (2);
- on a radially outer surface (8,31) thereof, connecting means of anti-rotational form for providing a tangential constraint between said intermediate ring (4) and a braking band (3).

## Patentansprüche

1. Bremssystem (1), umfassend eine verschiebliche bzw. gleitende Scheibe für eine Scheibenbremse, die eine Drehachse (X-X) aufweist, umfassend gegenüberliegende Bremsflächen bzw. -oberflächen (7), die adaptiert sind, um mit einem feststehenden Sattel zu kooperieren bzw. zusammenzuwirken, umfassend Betätigungsmittel, die vor nur einer der Bremsflächen (7) der Scheibe zum Aufbringen einer Bremstätigkeit bzw. -vorgang auf die Scheibe angeordnet sind, wobei die Scheibe weiters umfaßt:
- eine Glocke bzw. Buchse (2), die adaptiert ist, um auf einer Spindel eines Fahrzeugs festgelegt zu werden, und extern eine erste Vielzahl von Vorsprüngen (20) umfaßt, die sich parallel zur Drehachse (X-X) erstrecken und äußere Abschnitte aufweisen;
- ein Bremsband (3), umfassend wenigstens an einer radial inneren Fläche bzw. Oberfläche (9, 13) davon eine erste Vielzahl von Vertiefungen bzw. Ausnehmungen (11);
wobei
zwischen der Glocke (2) und dem Bremsband (3) zwischengelagert ein Zwischenring (4) vorgesehen ist, wobei der Ring auf einer radial äußeren Fläche bzw. Oberfläche (8, 31) davon eine zweite Vielzahl von Vorsprüngen (32) aufweist, die adaptiert sind, um geometrisch mit der ersten Vielzahl von Ausnehmungen (11) des Bremsbands (3) zu koppeln, um eine geometrische Kopplung zur Verfügung zu stellen, welche das Bremsband (3) an den Zwischenring (4) in einer tangentialen Richtung zwängt bzw. beschränkt;
wobei das Bremssystem (1) **dadurch gekennzeichnet ist, daß** der Zwischenring (4) beinhaltet:
- an einer radial inneren Fläche bzw. Oberfläche (27) davon eine zweite Vielzahl von Vertiefungen bzw. Ausnehmungen (28), die eine Wand einer Ausnehmungsbasis (13) aufweisen;
- wobei jede der Ausnehmungen (28) eine Tiefe aufweist, die geeignet ist, um einen direkten Kontakt der Wand der Ausnehmungsbasis (13) mit dem radial äußeren Abschnitt (22) von jedem Vorsprung der Glocke (2) zu vermeiden;
- wobei die zweite Vielzahl von Ausnehmungen (28) adaptiert ist, um die Vielzahl von Vorsprüngen der Glocke (2) aufzunehmen und adaptiert ist, um ein freies Gleiten des Zwischenrings (4) entlang der Vielzahl von Vorsprüngen der Glocke (2) zu erlauben.

2. Bremssystem (1) nach Anspruch 1, wobei jede Ausnehmung der zweiten Vielzahl von Ausnehmungen (28) des Zwischenrings (4) durch Flanken (29) begrenzt ist, die radial angeordnet sind, um Elemente für das Lagern und Gleiten des Zwischenrings (4) auf bzw. an den Vorsprüngen der Glocke (2) auszubilden.

3. Bremssystem (1) nach Anspruch 1 oder 2, wobei der Zwischenring (4) mit einer Schulter (34) versehen ist, die in der Nachbarschaft einer Kante bzw. Rand angeordnet ist, die die äußere radiale Fläche bzw. Oberfläche des Zwischenrings (4) begrenzt, wobei die Schulter (34) adaptiert ist, um axial an das Bremsband (3) in Anschlag zu gelangen, das auf den Zwischenring (4) gepaßt ist.

4. Bremssystem (1) nach einem der Ansprüche 1 bis 3, wobei ein beschränkender bzw. Zwangsring (35) vorgesehen ist, welcher entfernbar mit einer seitlichen Fläche bzw. Oberfläche (37) des Zwischenrings (4) assoziiert sein kann, wobei der Zwangsring (35) adaptiert ist, um axial das Bremsband (3) einzuzwängen bzw. zu beschränken.

5. Bremssystem (1) nach Anspruch 4, wobei der Zwangsring (35) axial gegenüberliegend bzw. entgegengesetzt der Schulter (34) des Zwischenrings (4) so angeordnet ist, um das Bremsband (3) zwischen sich selbst und der Schulter (34) zu klemmen.

6. Bremssystem (1) nach Anspruch 4 oder 5, wobei der entfernbare Zwangsring bzw. Klemmring (35) mit dem Zwischenring (4) mittels Schrauben (39) verbunden ist.

7. Bremssystem (1) nach einem der Ansprüche 4 bis 6, wobei der Zwangsring (35), wenn er dem Zwischenring (4) zugeordnet ist, sich radial von nahe der äußeren Fläche bzw. Oberfläche (8) der Glocke (2) zu dem Bremsband (3) für einen Schutz der geometrischen Kopplung zwischen dem Bremsband (3) und dem Zwischenring (4) und auch für den Schutz der geometrischen gleitenden Kopplung zwischen dem Zwischenring (4) und der Glocke (2) erstreckt.

8. Bremssystem (1) nach einem der vorhergehenden Ansprüche, wobei der Zwischenring (4) aus einem Material gefertigt bzw. hergestellt ist, das für eine Übertragung von mechanischer Tätigkeit und zur selben Zeit für ein Gleiten adaptiert ist.

9. Bremssystem (1) nach Anspruch 8, wobei der Zwischenring (4) aus Stahl gefertigt ist.

10. Bremssystem (1) nach einem der vorhergehenden Ansprüche, wobei das Bremsband (3) von der selbstbelüftenden Art ist.

11. Bremssystem (1) nach einem der vorhergehenden Ansprüche, wobei das Bremsband (3) aus Gußeisen gefertigt ist.

12. Bremssystem (1) nach einem der vorhergehenden Ansprüche, wobei das Bremsband (3) aus einem kohlenstoffhaltigen Material gefertigt ist.

13. Bremssystem (1) nach einem der vorhergehenden Ansprüche, wobei das Bremsband (3) aus einem Siliziumcarbid enthaltenden Material gefertigt ist.

14. Bremssystem (1) nach einem der vorhergehenden Ansprüche, wobei zwischen der Glocke (2) und dem Zwischenring (4) eine Vorrichtung zum Vorbelasten bzw. Vorspannen der geometrischen Kopplung in einer radialen Richtung vorgesehen ist.

15. Bremssystem (1) nach Anspruch 14, wobei die Vorrichtung Mittel umfaßt, welche konstant den Zwischenring (4) in einer radialen Richtung zwingen bzw. beaufschlagen.

16. Bremssystem (1) nach Anspruch 15, wobei in der Oberseite von wenigstens einem der Vorsprünge der Glocke (2) eine Rille bzw. Nut (23) zur Verfügung gestellt ist, die für ein teilweises Aufnehmen einer Blattfeder (24) adaptiert ist, welche konstant den Zwischenring (4) von der Glocke (2) weg beaufschlagt.

17. Bremssystem (1) nach Anspruch 16, wobei die Blattfeder (24) auf einer Art Klemme bzw. Clip an den seitlichen Oberflächen des Vorsprungs (20) der Glocke (2) einhakt.

18. Bremssystem (1) nach einem der Ansprüche 1 bis 13, wobei zwischen der Glocke (2) und dem Zwischenring (4) eine Vorrichtung zum Vorbelasten der geometrischen Kopplung in einer tangentialen Richtung vorgesehen ist.

19. Bremssystem (1) nach Anspruch 18, wobei wenigstens einer der Vorsprünge der Glocke (2) wenigstens eine Kerbe bzw. Aussparung (25) an einer radialen Flanke (21) davon aufweist, die adaptiert ist, um eine Feder (26) aufzunehmen, welche die entsprechende Flanke (29) der Ausnehmung des Zwischenrings (4) weg von der Flanke (21) des Vorsprungs der Glocke (2) vorspannt.

20. Bremssystem (1) nach Anspruch 19, wobei die Feder (26) eine Feder ist mit einem gewellten bzw. sinusartigen Körper ist, welcher sich entlang der Kerbe (25) erstreckt, der mit Scheiteln der gekrümmten Abschnitte auf der Basis der Kerbe (25) aufruht und wenigstens ein Teil der gegenüberliegenden bzw. entgegengesetzten Scheitel gegen die entsprechende Flanke (29) der Ausnehmung des Zwischenrings (4) preßt.

21. Bremssystem (1) nach einem der vorhergehenden Ansprüche, wobei mit der Glocke (2) assoziiert eine Vorrichtung (36) zur Verfügung gestellt ist, um das Spiel aufzunehmen, das auf den Zwischenring (4) wirkt.

22. Bremssystem (1) nach Anspruch 21, wobei die das Spiel aufnehmende Vorrichtung (36) Mittel umfaßt, welche den Zwischenring (4) in einer axialen Richtung vorspannen, die an Anschlagmitteln für den Zwischenring (4) abgestützt ist, wobei die Anschlagmittel mit der Glocke (2) mittels einer Einschnürung verbunden sind, welche nachgeben kann, wenn ein vorbestimmter Schwellwert einer axialen Spannung bzw. Belastung überschritten ist.

23. Bremssystem (1) nach Anspruch 21 oder 22, wobei die das Spiel aufnehmende Vorrichtung (36) einen Abstütz- bzw. Trage- bzw. Supportring (41) umfaßt, welcher auf die Glocke (2) gepaßt werden kann, und weiters umfassend wenigstens eine Platte, die in eine rückstellfähige Gabelform (43) gebogen ist, die radial zu der Achse der Glocke (2) gerichtet ist und adaptiert ist, um mit einem vorbestimmten Druckniveau die Flanken (21) der Vorsprünge der Glocke (2) zu ergreifen.

24. Bremssystem (1) nach Anspruch 23, wobei die Gabelplatte (43) eine Kante bzw. einen Rand aufweist, die zu dem Zwischenring (4) schaut bzw. gerichtet ist, indem sie einen Anschlag bzw. Stopanschlag ausbildet.

25. Bremssystem (1) nach Anspruch 24, wobei die das Spiel aufnehmende Vorrichtung (36) weiters wenigstens eine S-förmige Feder (50) umfaßt, die durch eines ihrer Enden (51) mit dem Supportring (41) verbunden ist und mit einem aktiven Ende (52) davon von dem Supportring (41) zu dem Zwischenring (4) mit einer Länge, die einen vorbestimmten Wert aufweist, in bezug auf die Anschlagkante bzw. -rand (49) der Gabelplatte (43) vorragt.

26. Verbindungselement für gleitende Scheibenbremsbänder (3) von Scheibenbremsen, umfassend:
einen Zwischenring (4), umfassend:
- an einer radial inneren Fläche bzw. Oberfläche (27) davon Verbindungsmittel einer Anti-Rotationsform, welche frei axial gleiten können, wobei die Mittel für die Verbindung des Zwischenrings (4) mit einer Glocke bzw. Buchse (2) adaptiert sind;
- an einer radial äußeren Fläche bzw. Oberfläche (8, 31) davon Verbindungsmittel einer Anti-Rotationsform, um eine tangentiale Vorspannung bzw. Beschränkung zwischen dem Zwischenring (4) und einem Bremsband (3) zur Verfügung zu stellen.

## Revendications

1. Système de freinage (1) comprenant un disque glissant pour un frein à disque ayant un axe de rotation (X-X), comprenant des surfaces de freinage opposées (7) adaptées pour coopérer avec un calibre fixe comprenant un moyen d'actionnement agencé à l'avant de seulement une des surfaces de freinage (7) du disque pour appliquer une action de freinage au disque, ledit disque comprenant en outre :
- une tulipe (2) conçue pour être fixée à un essieu d'un véhicule et comprenant de manière externe une première pluralité de protubérances (20) s'étendant parallèles audit axe de rotation (X-X) et ayant des parties extérieures ;
- une bande de freinage (3) comprenant sur au moins une surface radialement interne (9, 13) de celle-ci une première pluralité des évidements (11); dans lequel interposée entre ladite tulipe (2) et ladite bande de freinage (3) est disposée une bague intermédiaire (4), ladite bague comprenant sur une surface radialement extérieure (8, 31) de celle-ci une seconde pluralité de protubérances (32) adaptée pour se coupler géométriquement avec ladite première pluralité des évidements (11) de la bande de freinage (3) dans l'ordre afin de procurer un couplage géométrique qui contraint ladite bande de freinage (3) vers ladite bague intermédiaire (4) dans une direction tangentielle; ledit système de freinage (1) étant **caractérisé en ce que** ladite bague intermédiaire (4) comprend :
- sur une surface radialement interne (27) de celle-ci, une seconde pluralité d'évidements (28) ayant une paroi (13) de base d'évidement ;
- chacun desdits évidements (28) ayant une profondeur appropriée pour éviter le contact direct de ladite paroi de base d'évidement (13) avec la partie radialement vers l'extérieur (22) de chaque protubérance de la tulipe (2) ;
- ladite seconde pluralité d'évidements (28) étant conçue pour recevoir ladite pluralité des protubérances de la tulipe (2) et conçue pour permettre le glissement libre de la bague intermédiaire (4) le long de la pluralité des protubérances de la tulipe (2).

2. Système de freinage (1) selon la revendication 1, dans lequel chaque évidement de ladite seconde pluralité d'évidements (28) de la bague intermédiaire (4) est limité par des flancs (29) disposés radialement pour former des éléments pour le support et le glissement de la bague intermédiaire(4)sur les protubérances de la tulipe (2).

3. Système de freinage (1) selon la revendication 1 ou 2, dans lequel la bague intermédiaire (4) est munie d'un épaulement (34) disposé à proximité d'un bord reliant la surface radiale extérieure de ladite bague intermédiaire (4), ledit épaulement (34) étant conçu pour venir en butée axialement sur la bande de freinage (3) ajustée sur la bague intermédiaire (4).

4. Système de freinage (1) selon l'une quelconque des revendications 1 à 3, dans lequel une bague de contrainte (35) est disposée qui peut être associée de manière amovible à une surface latérale (37) de la bague intermédiaire (4), ladite bague de contrainte (35) étant conçue pour contraindre dans le sens axial la bande de freinage (3).

5. Système de freinage (1) selon la revendication 4, dans lequel ladite bande de contrainte (35) est opposée dans le sens axial audit épaulement (34) de la bague intermédiaire (4) de façon à serrer la bande de freinage (3) entre elle-même et l'épaulement (34).

6. Système de freinage (1) selon la revendication 4 ou 5, dans lequel la bague de contrainte amovible (35) est raccordée à la bague intermédiaire (4) au moyen des vis (39).

7. Système de freinage (1) selon l'une quelconque des revendications 4 à 6, dans lequel la bague de contrainte (35), lorsqu'associée à la bague intermédiaire (4), s'étend dans le sens radial depuis la proximité vers la surface extérieure (8) de la tulipe (2) vers la bande de freinage (3) pour protection du couplage géométrique entre la bande de freinage (3) et la bague intermédiaire (4), et également pour protection du couplage glissant géométrique entre la bague intermédiaire (4) et la tulipe (2).

8. Système de freinage (1) selon l'une quelconque des revendications précédentes, dans lequel ladite bague intermédiaire (4) est constituée d'un matériau adapté à la transmission de l'action mécanique et au même instant au glissement.

9. Système de freinage (1) selon l'une quelconque des revendications précédentes, dans lequel ladite bague intermédiaire (4) est constituée d'acier.

10. Système de freinage (1) selon l'une quelconque des revendications précédentes, dans lequel la bande de freinage (3) est du type à auto-ventilation.

11. Système de freinage (1) selon l'une quelconque des revendications précédentes, dans lequel la bande de freinage (3) est constituée de fonte.

12. Système de freinage (1) selon l'une quelconque des revendications précédentes, dans lequel la bande de freinage (3) est constituée d'un matériau comprenant du carbone.

13. Système de freinage (1) selon l'une quelconque des revendications précédentes, dans lequel la bande de freinage (3) est constituée de matériau comprenant des carbures de silicium.

14. Système de freinage (1) selon l'une quelconque des revendications précédentes, dans lequel entre ladite tulipe (2) et ladite bague intermédiaire (4) est disposé un dispositif pour pré-charger le couplage géométrique dans une direction radiale.

15. Système de freinage (1) selon la revendication 14, dans lequel ledit dispositif comprend un moyen qui pousse constamment la bague intermédiaire (4) vers une direction radiale.

16. Système de freinage (1) selon la revendication 15, dans lequel au-dessus d'au moins une des protubérances de la tulipe (2), une rainure (23) est ménagée, adaptée pour recevoir partiellement un ressort à lames (24) qui pousse constamment la bague intermédiaire (4) à l'opposé de la tulipe (2).

17. Système de freinage (1) selon la revendication 16, dans lequel ledit ressort à lames (24) s'accroche ou analogues avec un clip aux surfaces latérales de la protubérance (20) de la tulipe (2).

18. Système de freinage (1) selon l'une quelconque des revendications 1 à 13, dans lequel entre ladite tulipe (2) et ladite bague intermédiaire (4) est disposé un dispositif pour pré-charger le couplage géométrique dans une direction tangentielle.

19. Système de freinage (1) selon la revendication 18, dans lequel au moins une des protubérances de la tulipe (2) a au moins une encoche (25) sur son flanc radial (21), adapté pour recevoir un ressort (26) qui sollicite le flanc correspondant (29) de l'évidement de la bague intermédiaire (4) à l'opposé dudit flanc (21) de la protubérance de la tulipe (2).

20. Système de freinage (1) selon la revendication 19, dans lequel ledit ressort (26) est un ressort avec un corps sinueux qui s'étend le long de ladite encoche (25) supportant avec des sommets des parties incurvées sur la base de l'encoche (25) et pressant au moins une partie des sommets opposés contre le flanc correspondant (29) de l'évidement de la bague intermédiaire (4).

21. Système de freinage (1) selon l'une quelconque des revendications précédentes, dans lequel, associé à la tulipe (2), il est prévu un dispositif (36) pour prélever le jeu agissant sur ladite bague intermédiaire (4).

22. Système de freinage (1) selon la revendication 21, dans lequel ledit dispositif de prélèvement de jeu (36) comprend un moyen qui sollicite la bague intermédiaire (4) dans une direction axiale supportée au niveau du moyen de butée pour la bague intermédiaire (4), ledit moyen de butée étant raccordé à la tulipe (2) au moyen d'une contrainte qui peut s'éliminer lorsqu'un seuil prédéterminé de contrainte axiale est dépassé.

23. Système de freinage (1) selon la revendication 21 ou 22, dans lequel ledit dispositif de prélèvement de jeu (36) comprend une bague de support (41) qui peut être ajustée sur la tulipe (2) et comprenant en outre au moins une plaque incurvée en une forme de fourche résiliente (43) dirigée radialement vers l'axe de la tulipe (2) et conçue pour saisir avec un niveau prédéterminé de pression les flancs (21) des protubérances de la tulipe (2).

24. Système de freinage (1) selon la revendication 23, dans lequel ladite plaque à fourche (43) comporte un bord faisant face vers la bague intermédiaire (4) formant une butée.

25. Système de freinage (1) selon la revendication 24, dans lequel ledit dispositif de prélèvement de jeu (36) comprend, en outre, au moins un ressort en forme de S (50) relié par une de ses extrémités (51) à la bague de support (41) et dépassant avec son extrémité active (52) depuis ladite bague de support (41) vers la bague intermédiaire (4) d'une longueur, dépassant par rapport au bord de butée (49) de la plaque à fourche (43), ayant une valeur prédéterminée.

26. Elément de connexion pour des bandes de freinage à disque coulissant (3) des freins à disque, comprenant :
une bague intermédiaire (4) comprenant :
- sur une surface radialement interne (27) de celle-ci, un moyen de connexion de forme anti-rotationnelle qui peut glisser librement dans le sens axial, ledit moyen étant adapté à la connexion de ladite bague intermédiaire (4) à la tulipe (2) ;
- sur une surface radialement extérieure (8, 31) de celle-ci, un moyen de connexion de forme anti-rotationnelle pour procurer une contrainte tangentielle entre ladite bague intermédiaire (4) et une bande de freinage (3).
